# EUROPEAN PATENT APPLICATION

(11) **EP 1 263 260 A1**
(43) Date of publication of application: **04.12.2002**
(21) Application number: 02252865.7
(22) Date of filing: 23.04.2002
(51) Int. Cl.: H04Q 11/04, H04Q 3/00

(54) **Automation of provisioning of private line packet network connections**

(30) Priority: 31.05.2001 US 872297
(71) Applicant: LUCENT TECHNOLOGIES INC., Murray Hill, New Jersey 07974-0636 (US)
(72) Inventor: Wung, Joseph W., Tewksbury, Massachusetts 01876 (US)
(74) Representative: Watts, Christopher Malcolm Kelway, Dr.

(57) **Abstract**

A method and apparatus for establishing private line connections between two lines (3,4) connected to private terminals (1,2). A Provisioning Center (30) exchanges signaling messages with the two switches (5,6) connected to the two lines. The exchange of signaling messages allows one of the two switches to identify the two end system addresses of an interswitch network (20,22) for interconnecting the two terminals. Advantageously, standard protocol messages can be used for establishing these private packet connections. Advantageously, the process of establishing private line connections is automated from the step of identifying the two lines to be connected in the Provisioning Center. Advantageously, this arrangement does not require the segregation of private network facilities.

## Description

### Technical Field:

This invention relates to the automated establishment of private line connect-ions in packet networks.

### Problem:

Private line service is a traditional telephone service which connects to tele-phone stations on a permanent basis. Such connections are useful, for example, between a stockbroker and a major client. The provisioning of such private line service has always been a substantial problem because the connections between the two telephone terminals is not established in the customary way that such connections are established for individual telephone calls, and the billing mechanism for the connect-ions is completely separate from the billing mechanism for ordinary telephone connections. In most of the older systems, private line connections bypass a switching network of the central office to which the customers are connected, and frequently bypass the switching networks of intermediate switches between the two end offices, using only the cross-connect switches which distribute transmission facilities to these intermediate switches. In summary, provision of private line service has been difficult to automate, and requires a separate and costly mechanism.

### Solution:

Applicant has studied these problems, and, in particular, has studied how these problems affect private line packet connections in modern telecommunications systems using packet switching and transmission facilities. For such packet networks, Applicant has invented a method and apparatus for automating most of the steps required for the provision of private line packet service.

The above problem is substantially alleviated and an advance is made over the teachings of the prior art in accordance with this invention, wherein a provisioning center is substituted for both switches as a source and destination for signaling mess-ages for establishing connections through a switch and through a network intercon-necting the two switches. Advantageously, the standard telephone signaling messages transmitted over a signaling network, such as the SS7 Signaling Network, can be used to control the establishment of all connections required for private line service.

In accordance with one preferred embodiment of Applicant's invention, using a packet network, a Provisioning Center sends a call set-up message, (in SS7, this is an Initial Address Message (IAM)), to a second of the switches serving the lines con-nected to the private line terminals. The Provisioning Center which has an identifi-cation similar to the identification of a central office, but no bearer channels or trunks, receives a responsive "address complete" message from this second switch, which office contains the end system address of a packet connection for that switch. The Provisioning Center can then send an initial address message to the first switch, and the second initial address message includes the end system address provided by the second switch. The first switch then selects an end system address and requests the packet network to establish a connection between the two end system addresses. Advantageously, the provisioning system supplies the identification of the two terminals in the initial address messages, and all operations for establishing the private line connection are handled using standard telephone and packet switch signaling arrangements.

### Brief Description of the Drawing(s):

Figure 1 is a block diagram illustrating the operation of Applicant's invention; and
Figure 2 is a flow diagram illustrating the operation of Applicant's invention.

### Detailed Description:

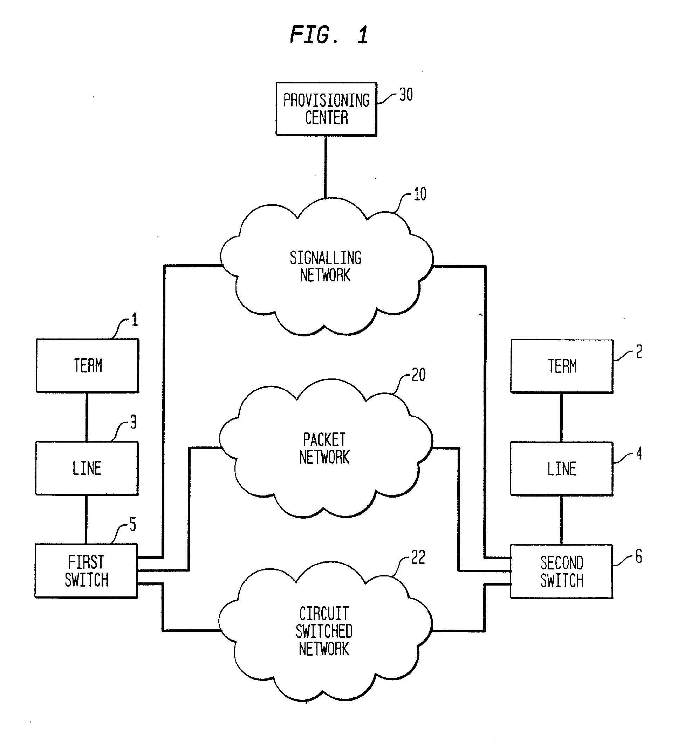

Figure 1 shows two terminals, terminal (1) and terminal (2), between which a private line connection is to be established. The two terminals are connected via lines (3) and (4), respectively; first to switch (5) and second, to switch (6), respectively.

The first and second switches are connected by a Signaling Network, SS7 Signaling Network (10), and by Packet Network (20). Each switch comprises processor means and a database operating under program control to execute the necessary program steps, and to access data. The Packet Network is used as the medium for carrying communications between terminals (1) and (2), while the Signaling Network is the means for communicating signaling and control information for establishing and disconnecting connections, in this case, through Packet Network (20). In accordance with Applicant's invention, a Provisioning Center (30), is also connected to Signaling Network (10). In one preferred embodiment, the Provisioning Center (30) has a Point Code, so that it can transmit and receive signaling messages in the same way that first and second switches (5) and (6) can transmit and receive signaling messages. In alternate packet network configurations, the signaling network is incorporated in the packet network.

The critical signaling messages for the establishment of private line service are the Initial Address Message (IAM), and the response, which is an "address complete" message. Both of these messages are defined in the Standard Signaling Protocol of Signaling System 7 (SS7). For packet systems, the Bearer Independent Call Control (BICC) Protocol is specified.

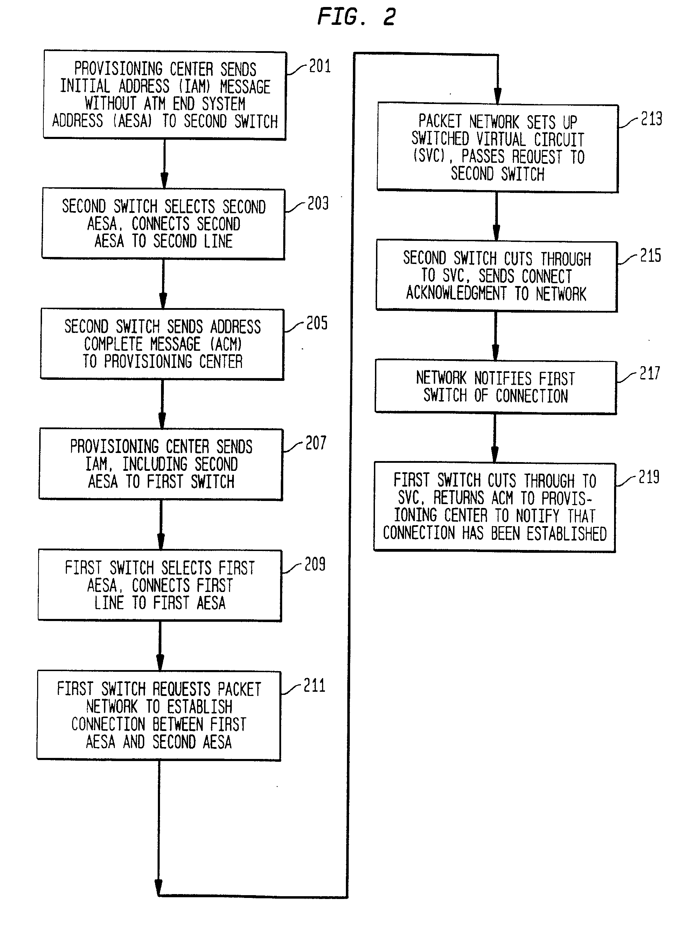

The process of establishing a private line connection can best be followed by reference to the flow chart of Figure 2. When a Provisioning Center, comprising processor means and a database operating under program control to execute the necessary program steps and to access data, establishes private line service between two terminals, the Provisioning Center knows the identity of the two terminals, as specified by their E. 164 numbering plan directory numbers. In this example, the packet network is an ATM Network. The Provisioning Center looks like a tandem switch for call control, but has no bearer channel or trunk. The process starts when the Provisioning Center sends an initial address message without an ATM end system address for the other end of the connection to second switch (6), (Action Block 201). The second switch selects a second ATM end system address, and connects second line (4) to that ATM end system address, i.e., to a port for accessing that ATM end system address, (Action Block 203). The second switch then sends an "address complete" message, which now includes the second ATM end system address to the Provisioning Center, (Action Block 205). The Provisioning Center now sends an initial address message, (including the second ATM end system address), to the first switch, (Action Block 207). The first switch selects a first ATM end system address, and connects the first line to that ATM end system address, (Action Block 209). The first switch then sends an "address complete" message to the Provisioning Center to verify receipt of the initial address message, and to indicate that the desired connection will be estab-lished. The first switch then requests the packet network to establish the first ATM end system address to second ATM End System Address (AESA) connection, (Action Block 211). The packet network passes the request to the second switch, (Action Block 213). The second switch sends a connect request for the connection between the first and second AESA to the network, (Action Block 215). The network notifies the first switch of the connection, (Action Block 217). The first switch then returns an "address complete" message to the Provisioning Center to notify that unit, that the requested connection has been established, (Action Block 219).

The first and second switches (5) and (6) of this description, can be any entity which switches between the signals on line (3) or line (4), and the access ports to Packet Network (20). The Packet Network (20) can be can be an Internet Protocol (IP) Network, an ATM (Asynchronous Transport Mode) Network, or any other packet network. Using SS7 ISUP messages, the Provisioning Center sends the messages that result in the establishment of the connections between the packet network and the end terminals.

While in the example of Fig. 2, the packet connection is through a network such as an ATM (Asynchronous Transfer Mode) Network, which uses a virtual connection, (in contrast to an IP Network, which is connectionless), if an IP Network is used, then instead of providing virtual circuit address, it is necessary to provide an IP end system address.

While the above description has been for a system using a packet network between the originating switch and the terminating switch, the same general arrangement can be used with a circuit switched network (22) interconnecting the originating switch and the terminating switch. The Provisioning Office (30) signals the terminat-ing switch to establish a connection between terminal (2) and a trunk connected to the circuit switched network (22). The terminating switch in its "address complete message" response to the provisioning switch, identifies the trunk to be used. The Provisioning Office then sends a message to the originating switch to establish a connection between terminal (1) and the identified trunk connected to terminating switch (6). The originating switch will then initiate the establishment of a connection through the circuit switched network to that trunk. The initial address message and "address complete message", in this case, are messages specified by the SS7 (ISUP) Integrated Services Digital Network (ISDN) User Part Protocol.

The above description is of one preferred embodiment of Applicant's invention. Many other embodiments will be apparent to those of ordinary skill in the art without departing from the scope of the invention. The invention is limited only by the attached Claims.

## Claims

1. In a telecommunications system comprising a provisioning center and a first and second switch, a method of establishing a private line connection between a first and second line, comprising the steps of:
assigning to a provisioning center, an address of a switching element for receiving and transmitting signaling messages from and to a signaling network;
the provisioning center sending a first message to said first switch connectable to said first line, said initial message comprising an identification of said first line;
in said first switch connectable to said first line; identifying a first network address for accessing an interswitch network;
returning a response message to said provisioning center, said response message comprising said first network address;
said provisioning center sending a second message to said second switch connectable to said second line, said second message comprising an identification of said second line, and further comprising said first network address;
said second switch selecting a second network address;
connecting said second line to said second network address;
connecting said first line to said first network address; and
establishing a connection over said interswitch network between said first and said second network addresses.

2. The method of Claim 1, wherein the step of establishing a connection comprises the step of establishing a packet connection over said interswitch network, wherein said interswitch network is a packet network.

3. The method of Claim 2, wherein the step of establishing a connection comprises the step of establishing an Internet Protocol (IP) connection over said interswitch network, wherein said interswitch network is an IP network.

4. The method of Claim 1, wherein the step of establishing a connection comprises the step of establishing a circuit connection over said interswitch network, wherein said interswitch network is a circuit switched network.

5. The method of Claim 1, wherein the step of assigning to said provisioning center an address of a switching element comprises the step of assigning a Signaling System 7 Point Code.

6. In a telecommunications system comprising a provisioning center, a signaling network, and a first and second switch apparatus for establishing a private line connection between a first and second line, comprising:
means for assigning to a provisioning center, an address of a switching element for receiving and transmitting signaling messages from and to said signaling network;
the provisioning center comprising means for sending a first message to said first switch connectable to said first line, said initial message comprising an identification of said first line;
in said first switch connectable to said first line, means for identifying a first network address for accessing an interswitch network;
means for returning a response message to said provisioning center, said response message comprising said first network address;
said provisioning center further comprising means for sending a second message to said second switch connectable to said second line, said second message comprising an identification of said second line, and further comprising said first network address;
said second switch comprising means for selecting a second network address;
means for connecting said second line to said second network address;
means for connecting said first line to said first network address; and
means for establishing a connection over said interswitch network between said first and said second network addresses.

7. The apparatus of Claim 6, wherein said means for establishing a connection comprises means for establishing a packet connection over said interswitch network, wherein said interswitch network is a packet network.

8. The apparatus of Claim 7, wherein said means for establishing a connection comprises means for establishing an Internet Protocol (IP) connection over said interswitch network, wherein said interswitch network is an IP network.

9. The apparatus of Claim 6, wherein said means for establishing a connection comprises means for establishing a circuit connection over said interswitch network, wherein said interswitch network is circuit switched network.

10. The method of Claim 6, wherein said means for assigning to said provisioning center an address of a switching element comprises means for assigning a Signaling System 7 Point Code.
